## Europäisches Patentamt
(19) **European Patent Office**

**Office européen des brevets**

(11) Veröffentlichungsnummer: **0 120 097**
**B1**

(12) # EUROPÄISCHE PATENTSCHRIFT

(45) Veröffentlichungstag der Patentschrift:
**26.10.88**

(51) Int. Cl.⁴: **C 04 B 18/06, C 04 B 18/30**

(21) Anmeldenummer: **83102682.8**

(22) Anmeldetag: **18.03.83**

(54) **Verfahren zur Entsorgung von Schlämmen.**

(43) Veröffentlichungstag der Anmeldung:
**03.10.84 Patentblatt 84/40**

(45) Bekanntmachung des Hinweises auf die Patenterteilung:
**26.10.88 Patentblatt 88/43**

(84) Benannte Vertragsstaaten:
**AT BE CH DE FR LI NL**

(56) Entgegenhaltungen:
**CHEMICAL ABSTRACTS, Band 90, 1979, Seite 290, Nr. 43547j, Columbus, Ohio, USA**
**CHEMICAL ABSTRACTS, Band 84, 1976, Seite 364, Nr. 79355k, Columbus, Ohio, USA**
**CHEMICAL ABSTRACTS, Band 85, 1976, Seite 421, Nr. 166275y, Columbus, Ohio, USA**
**Beton 29 (1979), Heft 11 S. 396-398**
**Beton 29 (1979) Heft 12 S. 441-443**

(73) Patentinhaber: **LEONHARD WEISS GmbH & Co.,**
**Brunnenstrasse 36, D-7180 Crailsheim (DE)**

(72) Erfinder: **Rapp, Walter, Dr., Erzbergerstrasse 22, D-7320 Göppingen (DE)**
Erfinder: **Schmidt, Fritz, Gustav-Adolf-Strasse 1, D-7320 Göppingen (DE)**
Erfinder: **Finke, Herbert, Dr., Markgröningerstrasse 19, D-7000 Stuttgart 40 (DE)**

(74) Vertreter: **Schroeter, Helmut et al, Bocksgasse 49, D-7070 Schwäbisch Gmünd (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf ein Verfahren zur Entsorgung von Schwermetallen enthaltenden Schlämmen, insbesondere Cadmium enthaltenden Flussschlämmen, die einen Wassergehalt von 50 bis 60 Gew.% und einen pH-Wert im Bereich von 6,7 bis 7,2 aufweisen, durch Verfestigung mittels Zusatz von Zement.

Zur Aufrechterhaltung der Schiffahrt auf Flüssen und Strömen müssen ständig Ablagerungen und Gechiebe aus den Oberläufen der Flüsse und ihren Nebenflüssen zur Erhaltung der nötigen Fahrwassertiefen gebaggert werden. So sind z.B. allein im Bereich des mittleren Neckars durchschnittlich jährlich ca. 200.000 t Baggergut aus dem Flussbett zu entfernen. Für dieses Baggergut sind folgende Werte typisch:

Trockensubstanz     ca. 45 Gew.%

In der Trockensubstanz:

| | | | | |
|---|---|---|---|---|
| Organische Substanz | 8 | bis | 10 | Gew.% |
| N (Stickstoff) gesamt | 0,2 | bis | 0,4 | Gew.% |
| Glühverlust | 17 | bis | 19 | Gew.% |
| CaO | 8,5 | bis | 10 | Gew.% |
| $SiO_2$ | 45 | bis | 50 | Gew.% |
| $Al_2O_3$ | 10 | bis | 12 | Gew.% |
| $Fe_2O_3$ | 4 | bis | 5 | Gew.% |
| MgO | 2 | bis | 4 | Gew.% |

Schwermetalle insgesamt
(Cd, Cr, Cu, Hg, Ni,
Pb, Zn)     0,1 bis 0,3 Gew.%
pH-Wert     6,7 bis 7,2

Kornverteilung:
0 bis 0,063 mm
(Schluff)     75 bis 95 Gew.% $\varnothing$ 88 Gew.%
0,063 bis 0,2 mm
(Sand, Kies)     4 bis 24 Gew.% $\varnothing$ 11 Gew.%
Rechengut (Wohlstandsmüll)     1%
$\varnothing$ = Mittelwert

In den Flussschlämmen sind 5 bis 15 Gew.% organische Substanzen (bezogen auf die Trockensubstanz) enthalten. Dieser Umstand macht es erklärlich, dass das Baggergut bislang als Dünge- und Bodenverbesserungsmittel eingesetzt wurde. Diese Art der Schlammbeseitigung im Landbau wurde mit der Klärschlammverordnung vom 25. 6. 1982 neu geregelt.

Die teils hohe Belastung mit Schwermetallen wie Chrom, Cadmium, Kupfer, Quecksilber, Nikkel, Blei und Zink macht es erforderlich, dass der früher auf landwirtschaftliche Nutzflächen aufgebrachte Schlamm, hauptsächlich wegen des hohen Cadmiumgehaltes, mühsam wieder abgetragen werden muss.

Die Schwermetallbelastung, Reste von Zusätzen, z.B. Reinigungsmitteln, Pflanzenschutzmitteln, Arzneimitteln und die Kontamination mit pathogenen Keimen und Parasiten macht eine Entsorgung schwierig.

Für diese Art der Schlämme gibt es bislang nur die Beseitigung in sogenannten Sonderdeponien, d.h. Deponien, die von Grundwasserströmen der Umgebung auf natürliche oder künstliche Weise wasserdicht abgeschlossen sind.

Eine weitere Schwierigkeit liegt in dem hohen Wassergehalt der Schlämme, der meist bei 50 bis 60% liegt.

Über die Entsorgung von Flussschlämmen wurde in den letzten Jahren gelegentlich publiziert; es wurden folgende Möglichkeiten aufgezeigt.

1. Aufbereitung durch Entwässerung
   a) in Trockenbeeten
   b) mit Hilfe von Zentrifugen
   c) mit Hilfe von Kammerfilterpressen
   d) mit Hilfe von Siebbandpressen verschiedener Systeme
   e) mit Hilfe von Kolben- und Schneckenpressen
   f) mit Hilfe von Flockungsmitteln
   g) durch thermische Schlammtrocknung

2. Entsorgung
   a) durch Verklappen
   b) durch Verbrennung in Wirbelschichtöfen, Drehrohröfen u.ä.
   c) durch Herauslösen der Schwermetalle mit Hilfe von Salzsäure
   d) durch Herstellung von Ziegeln u.ä. durch Brennen.

Alle aufgeführten Entsorgungsvorschläge sind mit wesentlichen Nachteilen behaftet.

Zu a) Ein Verklappen der Schlämme ins Meer verbietet die heutige Gesetzgebung.

Zu b) eine Verbrennung ist nur dann möglich, wenn man dem Schlamm z.B. Altöl, Kohlenstaub u.ä. zumischt oder aber den Verbrennungsvorgang mit Primärenergie unterhält. Das Problem der Schwermetalle in den Rauchgasen und Aschen ist durch dieses Verfahren nicht gelöst.

Zu c) Dieses elegante Verfahren, bei dem alle Schwermetalle isoliert werden, scheitert daran, dass für diese Metalle komplizierte Trennungsgänge nötig sind, wenn man sie wiedergewinnen will. Die eingesetzte Salzsäure muss mit Kalk oder Natronlauge neutralisiert werden. Zwangsläufig müssen dadurch in die Gewässer grosse Mengen an Chlor-Ionen eingeleitet werden.

Zu d) Beim Brennen der Schlämme hat man ähnliche Probleme wie zu b) ausgeführt: Hoher Energieeinsatz und hoher Aufwand für die Abgasreinigung, denn Cadmium- und Quecksilberverbindungen sublimieren.

Ausserdem sind aus Chemical Abstracts, Band 90 (1979) Seite 290, Nr. 43554j (Flussschlämme) und aus der Zeitschrift «Beton» 29 (1979) Seiten 396–398 und 441 bis 443 (Klärschlämme und Flotationsschlämme) Verfahren zur Entsorgung von Fluss-, Klär- und Flotationsschlämmen durch Verfestigung mittels Zusatz von Zement bekannt. Aus Chemical Abstracts, Band 90 (1979), Seite 290, Nr. 43547j ist darüberhinaus bekannt, dass man auch Schwermetalle enthaltende Schlämme durch Zusatz von Zement und einer kleinen Menge an Calciumchlorid entsorgungsfähig machen kann.

Ferner ist bekannt, dass der Anfall von enormen Mengen an Flugasche Probleme hinsichtlich deren Entsorgung aufwirft.

Aufgabe der vorliegenden Erfindung ist es daher, einen Weg zur gleichzeitigen Entsorgung von Schwermetalle enthaltenden Flussschlämmen, insbesondere von Cadmium enthaltenden Flussschlämmen, und Flugasche zu finden.

Überraschenderweise wurde gemäss der vorliegenden Erfindung gefunden, dass sich diese Aufgabe dadurch lösen lässt, dass man die einen Wassergehalt von 50 bis 60 Gew.% und einen pH-Wert im Bereich von 6,7 bis 7,2 aufweisenden Flussschlämme zunächst mit 3 bis 35 Gew.% Zement mischt, wobei die zugegebene Zementmenge mindestens so gross ist, dass das Gemisch einen pH-Wert von grösser als 8, insbesondere 10 und 13 aufweist, dann dem Gemisch Flugasche in einer Menge bis zu 1/3 der Gesamtmenge einverleibt und schliesslich das Endgemisch aushärten lässt.

Das Problem der Entsorgung der erwähnten Schlämme, ohne dass dabei die oben erwähnten Nachteile auftreten, wird somit durch die Erfindung nach Anspruch 1 gelöst.

Überraschenderweise ergab sich, dass man durch Zumischen von Zement in einer Menge von 3 bis 35 Gew.% und von Flugasche in einer Menge bis zu 1/3 der Gesamtmenge zu den Schlämmen nicht nur das Problem der Entsorgung, sondern darüberhinaus auch das Problem des Trocknens lösen kann und zwar unter gleichzeitiger Entsorgung von Schwermetallen enthaltenden Schlämmen als auch von Flugasche.

Der Zementanteil ist entscheidend für die Druck- und Scherfestigkeit des damit hergestellten Betons und auch für dessen Alkalität. Die Alkalität des Gemisches aus Schlamm und Zement, die > pH = 8 sein muss, am besten zwischen pH = 10 und pH = 13 liegen sollte, gewährleistet, dass die Schwermetalle als Oxide, gegebenenfalls als Sulfide vorliegen und damit, gleich den entsprechenden Mineralien dieser Schwermetalle, praktisch unlöslich sind. Eine Eluierung der Schwermetalle durch Wasser (Auslaugversuche nach den Deutschen Einheitsverfahren zur Wasser- und Abwasseruntersuchung) ist nicht mehr möglich. Die erforderlichen pH-Werte des Gemisches lassen sich durch einen entsprechenden Prozentsatz von Zement innerhalb der angegebenen Grenzen einstellen.

Überraschenderweise wurde ferner gemäss der vorliegenden Erfindung gefunden, dass man dem Gemisch aus Schwermetalle enthaltenden Schlämmen, Zement und Flugasche auch 2 Gew.% Trockensubstanz enthaltenden Klärschlamm in einer Menge bis zur Hälfte der Gesamtmenge zumischen kann, wobei für den Fall, dass der Klärschlamm einen höheren Anteil an Trockensubstanz aufweist, proportional weniger Klärschlamm zugesetzt wird.

Als Zement wird vorzugsweise Portlandzement oder Hochofenzement eingesetzt, wobei man für den Fall, dass man das erhärtete Gemich auf übliche Erd- und Bauschuttdeponien ablagern will, Zement in einer Menge von 6 bis 12 Gew.% einsetzt. Derart verfestigte Schlämme lassen sich spätestens zwei Tage nach dem Mischvorgang begehen und befahren. Für den Fall, dass man das erhärtete Gemisch für Auffüllung aller Art zur Schonung von Rohstoffreserven oder als Zuschlagsstoff für Betonwaren geringer Festigkeit, wie Formsteine, Platten, insbesondere Dämmplatten und Leichtbeton, verwenden will, setzt man Zement in einer Menge von 20 bis 25 Gew.% ein.

Die folgenden Beispiele erläutern weiterhin die Erfindung, ohne sie jedoch darauf einzuschränken.

Beispiel 1

Ein Gemisch aus 55 Gew.% Schlamm (Neckarbaggergut), 20 Gew.% Portlandzement PZ 35 und 25 Gew.% Flugasche wird in eine Form aus Schalbrettern gegossen und nach 7 Tagen auf seine Festigkeit untersucht. Die Bruchfestigkeit ist 6,2 KN; die Druckfestigkeit ist 0,60 N/mm². Die Dichte ist 1,70; die Trockensubstanz 73,8 Gew.% nach 4 Tagen. Auslaugversuche nach den Deutschen Einheitsverfahren zur Wasser- und Abwasseruntersuchung ergaben in einer unzerstörten und zerstörten Probe jeweils < 0,0003 mg/l Cadmium im Eluat. Die gleichen Werte wurden für Kupfer, Nikkel, Blei und Zink gefunden. Für die nachfolgenden Beispiele wurden die gleichen Werte ermittelt. Der pH-Wert des Eluats ist 12,35.

Beispiel 2

Ein Gemisch aus 80 Gew.% Schlamm; 10 Gew.% Portlandzement PZ 45 und 10 Gew.% Flugasche wird nach 28 Tagen auf seine Festigkeit untersucht. Die Druckfestigkeit ist 2,04 N/mm². Die Dichte ist 1,25; die Trockensubstanz 68,4 Gew.% nach 4 Tagen, der pH-Wert des Eluats ist 11,95.

Beispiel 3

Ein Gemisch aus 28 Gew.% Schlamm; 10 Gew.% Portlandzement PZ 35; 6 Gew.% Weissfeinkalk (CaO); 28 Gew.% Flugasche und 28 Gew.% Klärschlamm mit einer Trockensubstanz von 1,5 Gew.% wird nach 7 Tagen auf seine Festigkeit untersucht. Die Bruchfestigkeit ist 4,8 KN; die Druckfestigkeit 0,49 N/mm². Die Dichte ist 1,54; die Trockensubstanz 63,4 Gew.% nach 4 Tagen, der pH-Wert des Eluats ist 12,6.

Analyse der Flugasche

| | |
|---|---|
| Trockensubstanz: | 99,2 Gew.% |
| Natrium | 13.000 mg/kg Trockensubstanz |
| Kalium | 11,500 mg/kg Trockensubstanz |
| Kalzium | 4,800 mg/kg Trockensubstanz |
| Magnesium | 10,500 mg/kg Trockensubstanz |
| Eisen | 80,000 mg/kg Trockensubstanz |
| Aluminium | 50,000 mg/kg Trockensubstanz |
| Chrom | 1,800 mg/kg Trockensubstanz |
| Kupfer | 2,500 mg/kg Trockensubstanz |
| Nickel | 1,000 mg/kg Trockensubstanz |
| Cadmium | 24 mg/kg Trockensubstanz |
| Quecksilber | < 0,1 mg/kg Trockensubstanz |
| Zink | 5,300 mg/kg Trockensubstanz |
| Sulfit | < 5 mg/kg Trockensubstanz |
| Phosphat PO₄ | 15,000 mg/kg Trockensubstanz |

Analyse des Klärschlamms

| | |
|---|---|
| Trockensubstanz: | 29,2 Gew.% |
| Kupfer | 250 mg/kg Trockensubstanz |

| | |
|---|---|
| Nickel | 40 mg/kg Trockensubstanz |
| Chrom | 80 mg/kg Trockensubstanz |
| Zink | 1.000 mg/kg Trockensubstanz |
| Cadmium | 1,7 mg/kg Trockensubstanz |
| Blei | 180 mg/kg Trockensubstanz |

## Patentansprüche

1. Verfahren zur Entsorgung von Schwermetalle enthaltenden Schlämmen, insbesondere Cadmium enthaltenden Flussschlämmen, die einen Wassergehalt von 50 bis 60 Gew.% und einen pH-Wert im Bereich von 6,7 bis 7,2 aufweisen, durch Verfestigung mittels Zusatz von Zement, dadurch gekennzeichnet, dass man gleichzeitig Flugasche mitentsorgt, wobei man

(a) die Flussschlämme zunächst mit 3 bis 35 Gew.% Zement mischt, wobei die zugegebene Zementmenge mindestens so gross ist, dass das Gemisch einen pH-Wert von grösser als 8, insbesondere zwischen 10 und 13 aufweist, dann

(b) dem Gemisch (a) Flugasche in einer Menge bis zu ⅓ der Gesamtmenge einverleibt und schliesslich

(c) das Endgemisch aushärten lässt.

2. Verfahren nach Anspruch 1, dadurch gekennzeichnet, dass man dem Gemisch aus (a) und (b) 2 Gew.% Trockensubstanz enthaltenden Klärschlamm in einer Menge bis zur Hälfte der Gesamtmenge zumischt, wobei für den Fall, dass der Klärschlamm einen höheren Anteil an Trockensubstanz aufweist, proportional weniger Klärschlamm zugesetzt wird.

3. Verfahren nach Anspruch 1 und/oder 2, dadurch gekennzeichnet, dass man als Zement Portlandzement oder Hochofenzement einsetzt.

4. Verfahren nach einem oder mehreren der Ansprüche 1 bis 3, dadurch gekennzeichnet, dass man für den Fall, dass man das erhärtete Gemisch auf Deponien ablagern will, Zement in einer Menge von 6 bis 12 Gew.% einsetzt.

5. Verfahren nach einem oder mehreren der Ansprüche 1 bis 4, dadurch gekennzeichnet, dass man für den Fall, dass man das erhärtete Gemisch für Auffüllungen oder als Zuschlagsstoff für Betonwaren verwenden will, Zement in einer Menge von 20 bis 25 Gew.% einsetzt.

## Claims

1. A process for the disposal of sludges containing heavy metals, in particular cadmium containing river sludges, having a water content of 50 bis 60 weight per cent and a pH value in the range from 6,7 to 7,2, by solidification by means of adding cement, characterized in that flue-ash is disposed of simultaneously, wherein

a) the river sludges are at first mixed with 3 to 35 weight per cent of cement, wherein the cement added has at least such an amount that the mixture has a pH value greater than 8, in particular between 10 and 13, then

b) incorporating in the mixture (a) an amount of up to ⅓ of the total amount flue-ash, and finally

c) letting the final mixture harden.

2. A process according to claim 1, characterized in that sewage sludge containing 2 weight per cent of dry substance is admixed in an amount up to half of the total amount to the mixture of (a) and (b), wherein proportionally less sewage sludge is added, if the sewage sludge has a higher portion of dry substance.

3. A process according to claims 1 and/or 2, characterized in that the cement is Portland cement or blast furnace slag cement.

4. A process according to one or more of claims 1 to 3, characterized in that 6 to 12 weight per cent cement are used, if the hardened mixture is to be deposited at dumps.

5. A process according to one or more of claims 1 to 4, characterized in that 20 to 25 weight per cent of cement are used, if the hardened mixture is to be utilized for back-fillings or as aggregate for concrete goods.

## Revendications

1. Procédé pour la solidification de boue contenant des métaux lourds, en particulier de boues de rivière contenant du cadmium, qui présentent une teneur en eau de 50 à 60% en poids et un pH dans la zone de 6,7 à 7,2 par solidification au moyen d'addition de ciment, caractérisé par le fait que l'on élimine simultanément des centres volantes, et dans lequel:

(a) on mélange tout d'abord les boues de rivière avec 3 à 35% en poids de ciment, la quantité de ciment ajoutée étant au moins assez élevée pour que le mélange présente un pH supérieur à 8, et de préférence compris entre 10 et 13, puis

(b) on incorpore au mélange (a) des cendres volantes en une quantité allant jusqu'à ⅓ de la quantité totale, et enfin (c) on laisse durcir le mélange final.

2. Procédé selon la revendication 1, caractérisé par le fait qu'on ajoute au mélange de (a) et de (b) de la boue de curage contenant 2% en poids de matières sèches en une quantité allant jusqu'à la moitié du mélange total, une quantité proportionnellement inférieure de boue de courage étant ajoutée au cas où la boue de courage présente une teneur supérieure en matières sèches.

3. Procédé selon la revendication 1 et/ou 2, caractérisé par le fait que comme ciment, on utilise du ciment portland ou du ciment de haut-fourneau.

4. Procédé selon une ou plusieurs des revendications 1 à 3, caractérisé par le fait que l'on ajoute du ciment en une quantité de 6 à 12% en poids au cas où l'on veut entreposer le mélange durci sur des décharges.

5. Procédé selon une ou plusieurs des revendications 1 à 4, caractérisé par le fait que l'on ajoute du ciment en une quantité de 20 à 25% en poids dans le cas où l'on veut utiliser le mélange durci pour des remplissages ou comme additif pour des produits en béton.